# EUROPEAN PATENT APPLICATION

(11) **EP 3 587 059 A1**
(43) Date of publication of application: **01.01.2020**
(21) Application number: 18179901.6
(22) Date of filing: 26.06.2018
(51) Int. Cl.: B28B 11/04, B32B 5/20, B28B 23/00, B28B 23/02, B29C 44/18, E04C 2/288

(54) **A METHOD FOR THE PRODUCTION OF POLYURETHANE PRECAST CONCRETE PANEL**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a method for the production of a polyurethane precast concrete panel and a polyurethane precast concrete panel produced by the method. The method comprises the steps of: adding a concrete slurry into a first mold cavity, placing a template in the first mold cavity along the inner periphery of its wall before the solidification of the concrete slurry, and then solidifying to obtain a first concrete panel; adding a concrete slurry into a second mold cavity, and placing the first concrete panel on the concrete in the second mold cavity before its solidification, with the side of the first concrete panel having the template facing the concrete in the second mold cavity; solidifying the concrete in the second mold cavity to form a second concrete panel, with a cavity formed between the first concrete panel and the second concrete panel, and then demoulding; and injecting a polyurethane reaction composition into the cavity and then curing to produce the precast concrete panel. The method for the production of the polyurethane precast concrete panel of the present invention is simple in process, and polyurethane precast concrete panels of various shapes and sizes can be produced without removing the polyurethane foaming mould or template.

## Description

### Technical Field

The present invention relates to a method for the production of polyurethane precast concrete panel and a polyurethane precast concrete panel obtained thereby. By using the method, polyurethane precast concrete panels with excellent quality can be produced without removing polyurethane foaming moulds or templates.

### Background Art

At present, prefabricated building and building integration are developing rapidly. Precast wallboards and floorpanels commonly used for building integration are mainly XPS and EPS boards. Due to the gaps in the joints of the boards, problems such as water infiltration and corrosion of steel bars are more likely to be encountered after construction, thereby affecting the safety, durability and comfortability of the building. It has been tried in the industry to form a continuous and seamless insulation layer by covering the concrete panel around its periphery with a template having a preformed injection hole, and injecting polyurethane using the RIM cavity perfusion method. But, such a process is very complicated.

CN101058216A discloses a method for manufacturing exterior wallboards, interior wallboards, floor panels and roof panels, which is a four-step method comprising making a mesh sheet, forming a framework of a mesh frame, making a thin concrete body, and forming a thermal insulation layer, in which the step for forming the thermal insulation layer comprises spraying or injecting rigid polyurethane foam in the cavity between two surface concrete layers, and then foaming to form a solid thermal insulation layer. The steps of the method are very complicated.

CN105756274A discloses a method for producing a polyurethane-based precast concrete thermal insulation element, comprising the steps of providing an unhardened substrate layer prepared from unhardened concrete, and forming a core layer on the unhardened substrate layer, wherein the core layer is formed by applying a polyurethane composition onto the unhardened substrate layer, and then curing the polyurethane composition to form hard polyurethane foam that serves as the core layer.

Nonetheless, there is still an urgent need in the industry of a simple and flexible method for producing polyurethane precast concrete panels.

### Summary of the Invention

In a first aspect of the present invention, there is provided a method for the production of a polyurethane precast concrete panel, comprising the steps of:
adding a concrete slurry into a first mold cavity, placing a template in the first mold cavity along the inner periphery of its wall before the solidification of the concrete, and then solidifying to obtain a first concrete panel;
adding a concrete slurry into a second mold cavity, and placing the first concrete panel on the concrete in the second mold cavity before its solidification, with the side of the first concrete panel having the template facing the concrete in the second mold cavity;
solidifying the concrete in the second mold cavity to form a second concrete panel, with a cavity formed between the first concrete panel and the second concrete panel, and then demoulding; and
injecting a polyurethane reaction composition into the cavity and then curing to produce the precast concrete panel.

The method of the present invention can further comprise the step of placing a steel truss in the first mold cavity prior to the addition of the concrete, or the step of placing a steel truss before the solidification of the first concrete panel. The concrete can be added by pouring or by any other way known in the industry.

The template of the present invention can be prepared from materials having a certain strength and thickness, and suitable templates can be any board commonly known to those skilled in the art, preferably EPS boards, XPS boards, polyurethane boards or wood boards, more preferably polyurethane boards or wood boards. The template can be made up of four plates or can be a four-sided plate prepared in advance or a plate of other shape. The size of the template can be the same as or slightly smaller than the first concrete panel, and the height of the template is lower than the height of the steel truss. The height of the template is in a range from 1 cm to 10 cm, preferably from 2 cm to 8 cm, and particularly preferably from 2 cm to 4 cm. The density of the template is preferably >25 kg/m3, more preferably >30 kg/m3.

For injecting the polyurethane reaction composition, the template can be provided with at least one preformed polyurethane injection hole, or at least one injection hole can be formed on the template prior to the injection of the polyurethane reaction composition.

The polyurethane reaction composition used in the method of the present invention comprises two components A and B, in which the component A is a polymethylene polyphenyl polyisocyanate (PMDI), and the component B is a premixed mixture comprising a polyether polyol and/or a polyester polyol.

The injection of the polyurethane reaction composition in the method of the present invention is preferably carried out using a polyurethane RIM cavity perfusion method.

The method of the present invention provides a solution to urgent problems encountered in the industry, such as complexity of processes, waste of molds, difficulty in demolding, and the like. The operation of the inventive method is simple, and there is no need to remove the polyurethane foaming mould or template, so that the polyurethane precast concrete panels show uniform foam and excellent quality. Moreover, various shapes and sizes of panels can be produced in a convenient and efficient way.

In another aspect of the present invention, there is provided a polyurethane precast concrete panel produced by the method as described above. The polyurethane precast concrete panel comprises two outer layers of concrete panels and a polyurethane foam layer provided there between. The polyurethane precast concrete panel produced has a total thickness in a range from 2 to 15 cm, preferably from 3 to 10 cm, and particularly preferably from 4 to 8 cm. The polyurethane foam has a thickness in a range from 1 cm to 10 cm, preferably from 2 cm to 8 cm, and particularly preferably from 2 cm to 4 cm.

### Brief Description of the Drawings

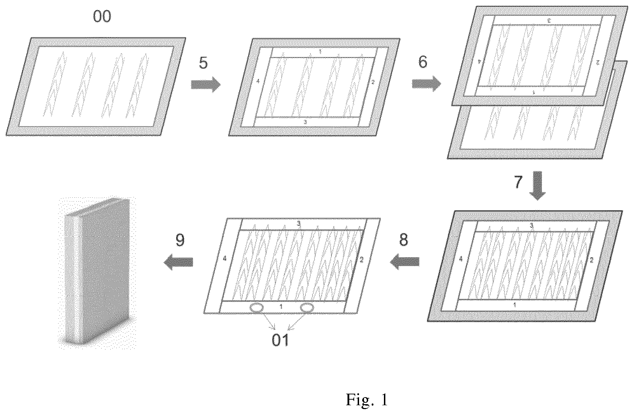

FIG. 1 is a schematic diagram of the method for the production of a polyurethane precast concrete panel according to the present invention, in which 00 refers to the concrete mold cavity, 01 refers to the injection hole, and 1, 2, 3 and 4 refer to the templates.
5 illustrates the step of adding a concrete slurry in the first mold cavity, and then placing a steel truss and a template to produce a first concrete panel;
6 illustrates the step of placing the solidified first concrete panel on the unsolidified second concrete panel, with the side of the first concrete panel having the template facing the second concrete panel;
7 illustrates the step of solidifying the first and second concrete panels and the template;
8 illustrates the step of injecting a polyurethane reaction composition into the cavity formed between the first and second concrete panels through an injection hole after the removal of the mold cavity;
9 illustrates the step of forming the polyurethane foam to produce the polyurethane precast concrete panel.

### Detailed Description of the Invention

The starting materials and equipment employed in the present application are as follows:
Desmodur44V20L: MDI isocyanate polymer having an NCO content of 31.5%, and a viscosity of 160 mPa·s at 25°C, purchased from Covestro Polymer (China) Co., Ltd., used as Component A of the polyurethane composition;
Baymer 28BB131: purchased from Covestro Polymer (China) Co., Ltd., used as Component B of the polyurethane composition;
Conventional high-pressure perfusion machine of model HK650: purchased from Hennecke;
Concrete: a conventional product of C30 grade purchased from the market;
Steel truss: a conventional product purchased from the market;
Template: a self-made polyurethane board with a density of 45 kg/m³.

According to the first aspect of the present invention, the method for the production of a polyurethane precast concrete panel comprises the steps of:
adding a concrete slurry into a first mold cavity, placing a template in the first mold cavity along the inner periphery of its wall before the solidification of the concrete, and then solidifying to obtain a first concrete panel;
adding a concrete slurry into a second mold cavity, and placing the first concrete panel on the concrete in the second mold cavity before its solidification, with the side of the first concrete panel having the template facing the concrete in the second mold cavity;
solidifying the concrete in the second mold cavity to form a second concrete panel, with a cavity formed between the first concrete panel and the second concrete panel, and then demoulding; and
injecting a polyurethane reaction composition into the cavity and then curing to produce the precast concrete panel.

In embodiment of current invention, the method of the present invention can further comprise the step of placing a steel truss in the first mold cavity prior to the addition of the concrete, or the step of placing a steel truss before the solidification of the first concrete panel. The concrete can be added by pouring or by any other way known in the industry.

Preferably, the template of the present invention can be prepared from materials having a certain strength and thickness, and suitable templates can be any board commonly known to those skilled in the art, preferably EPS boards, XPS boards, polyurethane boards or wood boards. The template can be made up of four plates or can be a four-sided plate prepared in advance or a plate of other shape. The size of the template can be the same as or slightly smaller than the first concrete panel, and the height of the template is lower than the height of the steel truss. The height of the template is in a range from 1 cm to 10 cm, preferably from 2 cm to 8 cm, and particularly preferably from 2 cm to 4 cm.

Preferably, for injecting the polyurethane reaction composition, the template can be provided with at least one preformed polyurethane injection hole, or at least one injection hole can be formed on the template prior to the injection of the polyurethane reaction composition.

The polyurethane reaction composition used in the method of the present invention comprises two components A and B, in which the component A is a polymethylene polyphenyl polyisocyanate (PMDI), and the component B is a premixed mixture comprising a polyether polyol and/or a polyester polyol, a silicone oil, a catalyst, and a blowing agent.

The injection of the polyurethane reaction composition in the method of the present invention is preferably carried out using a polyurethane RIM cavity perfusion method.

According to another aspect of the present invention, a polyurethane precast concrete panel produced by the method as described above. The polyurethane precast concrete panel comprises two outer layers of concrete panels and a polyurethane foam layer provided there between. The polyurethane precast concrete panel produced has a total thickness in a range from 2 to 15 cm, preferably from 3 to 10 cm, and particularly preferably from 4 to 8 cm. The polyurethane foam has a thickness in a range from 1 cm to 10 cm, preferably from 2 cm to 8 cm, and particularly preferably from 2 cm to 4 cm.

Through experiments, surprisingly, we find that the operation of the inventive methods in the invention are simple, and there is no need to remove the polyurethane foaming mould or template, so that the polyurethane precast concrete panels show uniform foam and excellent quality. And, various shapes and sizes of panels can be produced in a convenient and efficient way. Therefore, the productivity of polyurethane precast concrete panels is increased.

### Example 1

### Production process:

The mold cavity prepared in advance was adjusted in accordance with the size of the product, and the position of the internal fixtures was mapped. The concrete of C30 grade was evenly spread in the first mold cavity using a concrete pouring machine, and the mold cavity was oscillated until the surface of the concrete became smooth, to form the first concrete panel. Then, pre-prepared steel trusses and a four-side sealed polyurethane board/template having a thickness of 3 cm and a density of 45 kg/m³ were inserted and spliced along the perimeter of the first concrete panel, and then pressed moderately until the polyurethane board and the concrete panel were spliced seamlessly. After that, the panel was transported into a steam curing kiln using a conveyer and matured. After 20 minutes, the first concrete panel obtained was taken out. The concrete was poured into a second mold cavity, the first concrete panel was flipped upside down, and the steel truss exceeding the level of the mold cavity and the template was inserted into the unsolidified second concrete panel, until the template came into contact with the unsolidified concrete of the second concrete panel and a seamless splice was formed. After that, the panels were transported into a steam curing kiln using a conveyer and matured, and then taken out after 20 minutes. The first and second concrete panels were removed from the mold cavity, and a polyurethane reaction composition starting material adjusted to a temperature of 20-25°C was injected into the cavity formed between the first and second concrete panels by using a conventional high-pressure perfusion machine of model HK 650 from Hennecke through one or more injection holes preformed on the template. After being placed in the room for 24 hours, the whole polyurethane precast concrete panel was obtained without the need of removing the template. The thickness of the whole polyurethane precast concrete panel is 6 cm and the polyurethane foam is 3 cm.

The above process cleverly takes advantage of the fact that the template and the unsolidified concrete panels can be spliced and sealed seamlessly, and can be used flexibly, so that polyurethane precast concrete panels having uniform foam, high quality and excellent thermal insulation performance can be obtained without removing the polyurethane foaming mould or template.

Although some preferred embodiments of the present invention have been described above, they are not intended to be used as a limitation to the present invention. Various changes and modifications can be made by a person skilled in the art without departing from the spirit and scope of the present invention. Thus, the scope of protection of the present invention shall be defined by the scope of the claims.

## Claims

1. A method for the production of a polyurethane precast concrete panel, comprising the steps of:
adding a concrete slurry into a first mold cavity, placing a template in the first mold cavity along the inner periphery of its wall before the solidification of the concrete, and then solidifying to obtain a first concrete panel;
adding a concrete slurry into a second mold cavity, and placing the first concrete panel on the concrete in the second mold cavity before its solidification, with the side of the first concrete panel having the template facing the concrete in the second mold cavity;
solidifying the concrete in the second mold cavity to form a second concrete panel, with a cavity formed between the first concrete panel and the second concrete panel, and then demoulding; and
injecting a polyurethane reaction composition into the cavity and then curing to produce the precast concrete panel.

2. The method according to claim 1, wherein the template has at least one injection hole.

3. The method according to claim 1, further comprising providing at least one injection hole on the template prior to the injection of the polyurethane reaction composition.

4. The method according to claim 1, further comprising the step of placing a steel truss in the first mold cavity prior to the addition of the concrete slurry.

5. The method according to claim 1, further comprising the step of placing a steel truss before the solidification of the first concrete panel.

6. The method according to claim 4 or 5, wherein the height of the template is lower than the height of the steel truss.

7. The method according to claim 1, wherein the template has a height in a range from 1 cm to 10 cm, preferably from 2 cm to 8 cm, and particularly preferably from 2 cm to 4 cm.

8. The method according to claim 1, wherein the template is one or more selected from the group consisting of EPS boards, XPS boards, polyurethane boards and wood boards.

9. The method according to claim 1, wherein the template is a four-sided frame plate or is made up of four plates.

10. The method according to claim 1, wherein the polyurethane reaction composition comprises two components A and B, wherein the component A is polymethylene polyphenyl polyisocyanate (PMDI), and the component B is a premixed mixture comprising a polyether polyol and/or a polyester polyol.

11. The method according to claim 1, wherein the injection of the polyurethane reaction composition is carried out using a polyurethane RIM cavity perfusion method.

12. A polyurethane precast concrete panel produced by the method according to any one of claims 1-11, comprising a first concrete panel, a second concrete panel, and a polyurethane foam provided there between.

13. The polyurethane precast concrete panel according to claim 12, wherein the polyurethane precast concrete panel has a thickness in a range from 2 to 15 cm, preferably from 3 to 10 cm, and particularly preferably from 4 to 8 cm.

14. The polyurethane precast concrete panel according to claim 12, wherein the polyurethane foam has a thickness in a range from 1 cm to 10 cm, preferably from 2 cm to 8 cm, and particularly preferably from 2 cm to 4 cm.
